# EUROPEAN PATENT APPLICATION

(11) **EP 4 779 362 A1**
(43) Date of publication of application: **22.07.2026**
(21) Application number: 23952181.8
(22) Date of filing: 12.09.2023
(51) Int. Cl.: G01V 8/10

(54) **HUMAN BODY DETECTION SYSTEM AND PROGRAM FOR HUMAN BODY DETECTION SYSTEM**

(71) Applicant: Optex Co., Ltd., Otsu-shi, Shiga 520-0101 (JP)
(72) Inventor: URUSHIHARA, Hiroyuki, Otsu-shi, Shiga 520-0101 (JP); TOMOOKA, Hiroyuki, Otsu-shi, Shiga 520-0101 (JP)
(74) Representative: Müller Hoffmann & Partner
(86) International application number: PCT/JP2023/033146
(87) International publication number: WO 2025/057286

(57) **Abstract**

In order to provide a human body detection system that is able to detect a human body without using a high-resolution thermal imaging camera, the present invention is a human body detection system that detects a human body present within a preset alert range, and is characterized in being provided with a thermal imaging camera having temperature measuring elements arranged in an array formation, and an information processing device that determines whether or not an object captured by the thermal imaging camera is a human body, and in that a width dimension of a detection area detected by a single temperature measuring element in a set distance of the alert range is set to a width equivalent to a thickness of a human body.

## Description

### [Technical Field]

The present invention relates to a human body detection system and to a program for a human body detection system.

### [Technical Background]

A conventional human body detection system is a system such as that described in Document 1 of the Prior Art in which an image of a human body within an alert area is acquired using a thermal imaging camera, and after this thermal image has been processed, a report is given in accordance with the result of this processing.

In a system such as this, in order to make it easier to ascertain the features (i.e., the shape) of a human body within an alert range, there has been a trend towards increasing the resolution of the thermal image, in other words, a trend towards increasing the pixel count of the thermal imaging camera.

However, if the pixel count is increased, then it is probable that this will lead to corresponding increases in the cost and the size of the thermal imaging camera, as well as in the complexity of the image processing.

### [Documents of the Prior Art]

### [Patent Documents]

[Patent Document 1] Japanese Unexamined Patent Application Laid-Open No. 2021-163401

### [Disclosure of the Invention]

### [Problems to be Solved by the Invention]

The present invention was conceived in order to call into question the current prevailing technological belief that an improvement in the accuracy of a human body detection can only be brought about by increasing the resolution of a thermal imaging camera, and it is an object thereof to provide a human body detection system that is able to detect a human body without using a high-resolution thermal imaging camera.

### [Means for Solving the Problem]

In other words, a human body detection system according to the present invention is a human body detection system that detects a human body present within a preset alert range, and is characterized in being provided with a thermal imaging camera having temperature measuring elements arranged in an array formation, and an information processing device that determines whether or not an object captured by the thermal imaging camera is a human body, and in that a width dimension of a detection area detected by a single temperature measuring element in a set distance of the alert range is set to a width equivalent to a thickness of a human body.

The present invention was discovered and achieved as a result of intensive research by the inventors of the present application who discovered that sufficient human body detection accuracy can be obtained when used in applications such as an alert system or the like, even if the width dimension of the detection area of each temperature measuring element within a set distance of the alert range is increased to a thickness of a human body.

In other words, according to a human body detection system formed in this manner, it is possible to guarantee accuracy when detecting a human body within an alert range while using as few pixels as is practicable. Accordingly, if the size of the alert range is the same, compared to the conventional technology, by reducing the pixel count of the thermal imaging camera, it is possible to achieve reductions in both device cost and device size as well as a simplification of the image processing, and to also achieve an expanded alert range compared to the conventional technology if the pixel count is the same.

In a case in which a human body is present within a set distance of the alert range, then the width of the thickness of that human body is contained within the detection area of one or two temperature measuring elements of the thermal imaging camera. Moreover, a person who is adopting a normal stance presents a narrow, elongated configuration.

For this reason, it is preferable that a structure be employed in which, in a case in which human temperature detecting elements, which are the temperature measuring elements in the thermal imaging camera that detect a temperature whose temperature difference compared to a reference temperature is greater than a predetermined amount, or are the temperature measuring elements in the thermal imaging camera that detect a temperature that is within the range of human body temperatures, are arranged in one column or in two columns, then the information processing device determines that a human body is present. Note that it is more desirable that a determination that a human body is present be made in a case in which three of more temperature-detecting elements are arranged in a longitudinal direction.

The key point here is that the inventors of the present application discovered that it is possible to adequately detect a human body by creating a structure in which whether or not a human body is present is detected not by making a determination via an intricate configuration, as is the case conventionally, but by making a determination via a simple configuration such as when the1 temperature measuring elements are arranged in a rectangle. Moreover, by employing this type of structure, at the same time as the calculation processing required to detect a human body is made simpler, it becomes possible to accurately detect whether a human body is present within a set distance of an alert range based on two parameters (i.e., a measurement temperature obtained from a temperature measuring element and the arrangement mode of the temperature measuring elements).

In a case in which a human body is present at a closer distance than the set distance, then the width of the thickness of that human body is not contained within the detection area of two temperature measuring elements of the thermal imaging camera, but extends over the detection area of three or more temperature measuring elements so that multiple temperature measuring elements detect a human temperature. If a determination as to whether an object captured by a thermal imaging camera is a human body is made based on all of these multiple temperature measuring elements, then the amount of calculation processing performed by the information processing device increases.

In order to solve this problem, in a case in which human temperature detecting elements, which are the temperature measuring elements in the thermal imaging camera that detect a temperature whose temperature difference compared to a reference temperature is greater than a predetermined amount, or are the temperature measuring elements in the thermal imaging camera that detect a temperature that is within the range of human body temperatures, are located at the four corners of an arbitrary rectangle, then it is also possible for the information processing device to regard that rectangular area as a human temperature detection unit area where a human body temperature has been detected, and to determine that a human body is present based on the arrangement mode of a plurality of human temperature detection unit areas.

If this type of structure is employed, then because it is possible to determine whether an object captured by a thermal imaging camera is a human body is made based on temperature measuring elements positioned in four corners of each human temperature detection unit area, and not on the basis of all of the temperature measuring elements within a plurality of human temperature detection unit areas, the calculation processing to detect a human body located within an alert area can be simplified.

It is also possible for the information processing device to perform a smoothing operation such as averaging on the temperatures detected by the temperature measuring elements located in the four corners of an arbitrary rectangle in the thermal imaging camera, and in a case in which a temperature difference between the temperature determined via the smoothing operation and a reference temperature is equal to or greater than a predetermined value, or in a case in which the temperature obtained by the smoothing operation is within the range of human body temperatures, then the information processing device may regard that rectangular area as a human temperature detection unit area, and determine that a human body is present based on the arrangement mode of a plurality of human temperature detection unit areas.

If this type of structure is employed, then, even if it is not possible for a portion of the human body temperature of a person to be detected, such as, for example, in a case in which the person is carrying a thermal source such as a hand warmer or a refrigerant, the effects thereof can be canceled out by means of a smoothing operation so that a human body can be detected.

It is also possible for the information processing device to determine that a human body is present in a case in which the human temperature detection unit areas are arranged in one column or in two columns.

If this type of structure is employed, then not only is it easier to determine that a human body is present within an alert range, but it is also possible to use the same method as the method used for detecting and determining a human body located at the above-described set distance, thereby simplifying the calculation process.

It is also possible for the information processing device to determine whether or not a human body is present based additionally on changes over time in the human temperature detection unit areas.

If this type of structure is employed, then it is possible to reduce mistaken detections that are due to the effects of noise or of the background or the like such as when the human temperature detection unit area moves extremely quickly or does not move at all (such as, for example, if there is by chance a heat source in the background, such as a boiler that emits heat at a human body temperature), so that a human body present within the alert range can be detected with greater accuracy.

It is also possible for the information processing device to calculate a distance to a human body based on a number of temperature measuring elements on one side of a human temperature detection unit area.

If this type of structure is employed, then because it is possible, for example, to determine a distance between the thermal imaging camera and a human body, it is possible to calculate the position information of a person within the alert range, in other words, an angle and distance thereof relative to the thermal imaging camera. Moreover, it also becomes possible to increase the variety of human body detection options, such as progressively changing an alarm sound as a person approaches.

It is also possible for the information processing device to determine that an object captured by the thermal imaging camera is a non-human body based on the arrangement mode of the temperature measuring elements that detect the temperature of the non-human body in the thermal imaging camera.

If this type of structure is employed, then it becomes possible to also detect a non-human body present within the alert range, thereby increasing the range of applications as a result of it being possible to detect objects other than a human body.

It is also possible for the information processing device to determine a situation within the alert range based on a relationship between a temperature measuring element determined to be a human body and a temperature measuring element determined to be a non-human body.

Here, a temperature measuring element determined to be a human body is a human temperature detecting element that forms the basis for determining that an object captured by the thermal imaging camera is a human body, or is a temperature measuring element that constitutes a human temperature detection unit area, and a temperature measuring element determined to be a non-human body is a temperature measuring element that detected the non-human body temperature that forms the basis for determining that an object captured by the thermal imaging camera is a non-human body.

If this type of structure is employed, then in a case in which, for example, a human body and a high-temperature non-human body are detected within the alert area, it is possible to determine that a fire has been started based on the relative positions between these, and to then raise the warning level within the alert area based on this determination.

A program for a human body detection system according to the present invention is characterized by enabling a computer to function as the above-described information processing device. By employing this type of structure, the same actions and effects as those described above can be achieved.

### [Effects of the Invention]

According to the present invention which is formed in the manner described above, it is possible to detect a human body without using a high-resolution thermal imaging camera.

### [Brief Description of the Drawings]

[FIG. 1] FIG. 1 is a function block diagram showing functions of a human body detection system according to an embodiment of the present invention.
[FIG. 2] FIG. 2 is a schematic diagram illustrating a two-dimensional layout of temperature measuring elements of a thermal imaging camera in the same embodiment.
[FIG. 3] FIG. 3 is a schematic view showing a human body detection system of the same embodiment.
[FIG. 4] FIG. 4 is a flowchart showing a portion of operations of the human body detection system of the same embodiment.
[FIG. 5] FIG. 5 shows an Explanatory Diagram 1 which is used to explain functions of a determination unit of the same embodiment.
[FIG. 6] FIG. 6 shows an Explanatory Diagram 2 which is used to explain functions of a determination unit of various embodiments.

### [Best Embodiments for Implementing the Invention]

### [First Embodiment]

A first embodiment of a human body detection system 100 according to the present invention will now be described with reference to the drawings.

The present invention detects a human body HB, which is serving as a detection target, that is present within an alert range A that has been set in advance within an image acquisition range of a thermal imaging camera 2, and then reports a result of this detection. More specifically, the human body detection system 100 of the present embodiment is employed in an alarm system for detecting intruders and for crime prevention.

### [Structure of the Human Body Detection System 100]

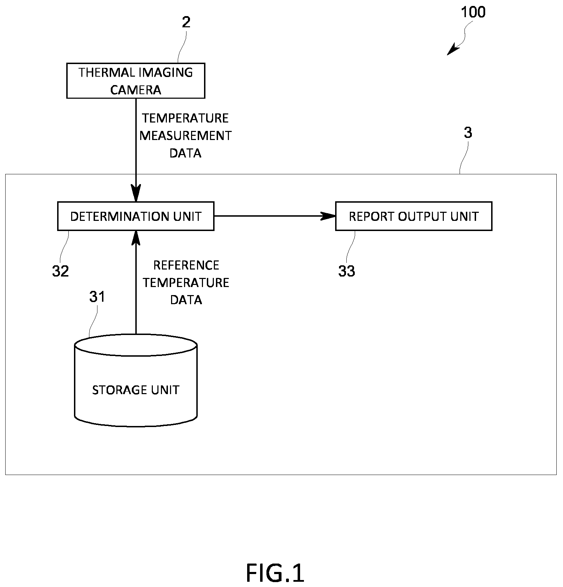

As is shown in FIG. 1, the human body detection system 100 of the present embodiment is provided at least with a thermal imaging camera 2 and an information processing device 3.

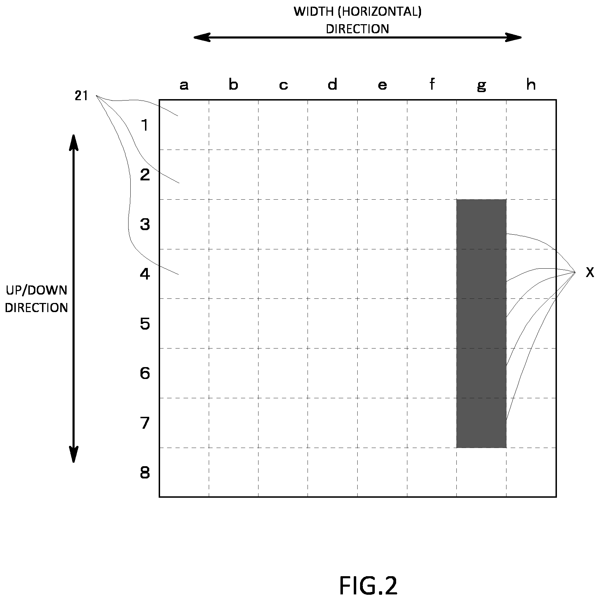

The thermal imaging camera 2 measures a temperature of an object within the image acquisition range thereof, and then outputs the measured temperature as temperature measurement data. As is shown in FIG. 2, the thermal imaging camera 2 is provided with a plurality of temperature measuring elements 21 that are arranged in a two-dimensional array formation, an optical component (not shown in the drawings) formed by a lens or the like, and an output unit (not shown in the drawings) that processes output signals from the respective temperature measuring elements 21 and then transmits the results as temperature measurement data to the information processing device 3.

Here, thermopile elements are used for the temperature measuring elements 21, however, it is also possible to use other elements that detect infrared radiation such as bolometer elements or pyroelectric elements or the like.

In the present embodiment, the temperature measuring elements 21 are arranged, as an example, in a two-dimensional array formation (8x8 in the drawing) in a vertical and horizontal matrix, and the position of each temperature measuring element 21 is specified by its row number and column number. For example, the position of the temperature measuring element 21 located in column a, row 1 is displayed as arrangement information (a1) and is recognized by this arrangement information by the information processing device 3.

The temperature measurement data of the present embodiment shows absolute temperatures measured by the respective temperature measuring elements 21, and can be converted into Celsius or Fahrenheit or the like. The arrangement information of the temperature measuring elements 21 that detected a particular temperature is included in the temperature measurement data.

The thermal imaging camera 2 of the present embodiment is mounted, as an example, on a wall so that an image acquisition surface thereof faces in a horizontal direction.

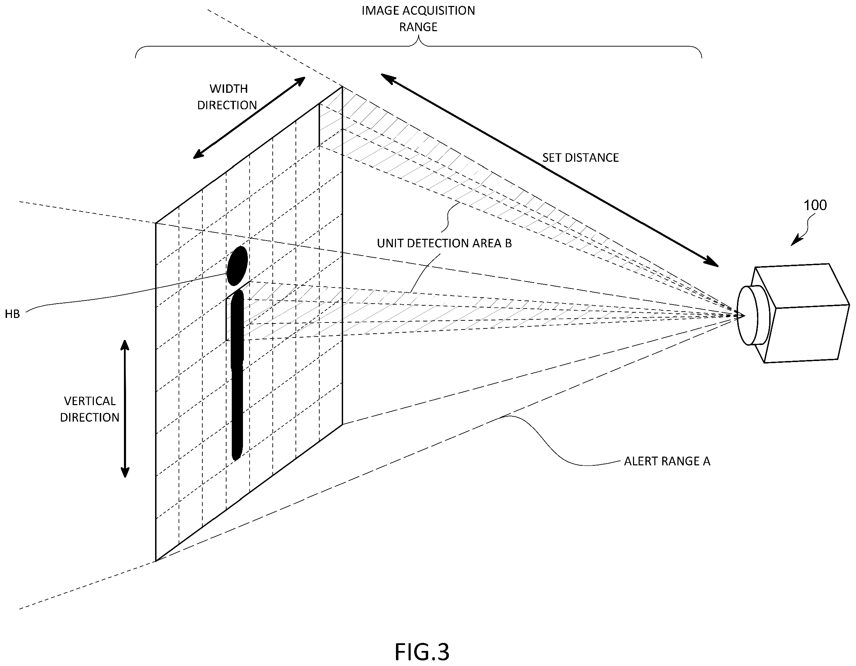

As is shown in FIG. 3, the image acquisition range of the thermal imaging camera 2 is prescribed by the arrangement of the temperature measuring elements 21 and the focal length of the lens (not shown in the drawings) being used in combination with the thermal imaging camera 2.

Moreover, the angle of view of a single temperature measuring element 21 is prescribed by the size of that temperature measuring element 21 and the focal length of the aforementioned lens.

Dimensions of the detection area of each single temperature measuring element 21 (hereinafter, referred to as a unit detection area B) at a location at a predetermined distance from the thermal imaging camera 2 are prescribed by the aforementioned predetermined distance, the size of each temperature measuring element 21, and the focal length of the lens of the thermal imaging camera 2.

In the present embodiment, as is shown in FIG. 3, a measurement distance at which the dimensions of the unit detection area B correspond to the width of the thickness of the human body HB is set as the set distance, and a range in the image acquisition range that is within the set distance is set as the alert range A. Note that in a case in which a thermal imaging camera 2 having an adjustable optical system is used, then it is possible for the alert range A (and the set distance) to be adjusted by adjusting this optical system.

The term 'corresponding to the width of the thickness direction of the human body HB' refers, for example, to the thickness of the chest and, more specifically, is a distance of approximately 15 to 30 cm. Note that it is also possible for the width dimension of the human body in the set distance to correspond to a horizontal width of the human body HB serving as the detection target (for example, the shoulder width or chest portion lateral diameter).

The information processing device 3 is a dedicated or general-purpose computer that is provided with a CPU, memory, input/ output interfaces, and AD converters and the like, and is connected to the thermal imaging camera 2 so as to be able to communicate therewith.

As is shown in FIG. 1, the information processing device 3 functions at least as a storage unit 31, a determination unit 32, and a report output unit 33. The storage unit 31 is formed in a predetermined area of the memory.

The storage unit 31 stores reference temperature data which shows a reference temperature for each temperature measuring element 21, and abnormal temperature data which shows an abnormal temperature range for each temperature measuring element 21.

The reference temperature data of the present embodiment shows a temperature of a background of each temperature measuring element 21.

The reference temperature data is preferably temperature measurement data obtained by measuring the temperature when no human body HB is present within the alert range A of the thermal imaging camera 2. In the present embodiment, the reference temperature data is temperature measurement data obtained by performing measurements when the human body detection system 100 was calibrated prior to being put into operation.

The reference temperature data may be past temperature measurement data obtained when the human body detection system 100 was being operated, and may be updated during the operation thereof. Moreover, the reference temperature data may be an average of the temperature measurement data over a predetermined period, or may be a moving average determined from time series changes in the temperature measurement data.

The abnormal temperature data shows a high or low temperature range that is not normally detected from a human body. The abnormal temperature data may be set to a temperature range of, for example, 45 degrees or more.

The determination unit 32 detects a human body by determining whether or not an object captured by the thermal imaging camera 2 is a human body HB, and then outputs the result of this determination to the report output unit 33 (described below).

The determination unit 32 compares a value of the temperature measurement data with a value of the reference temperature data for each of the temperature measuring elements 21, and then determines whether or not a difference between these (i.e., a temperature difference) is greater than a predetermined value.

Moreover, the determination unit 32 also compares a value of the temperature measurement data for any temperature measuring element 21 whose temperature difference was greater than the predetermined value with a value of the abnormal temperature data, and then determines whether or not that particular temperature measuring element 21 has detected an abnormal temperature.

In addition, the determination unit 32 also determines that a temperature measuring element 21 in which the temperature difference is greater than a predetermined value and that has also not detected an abnormal temperature is a temperature measuring element 21 in which a human body temperature has been detected (hereinafter, referred to as a 'human temperature detecting element X').

Note that it is also possible for the determination unit 32 to determine that a temperature measuring element 21 in which the temperature difference is greater than a predetermined value is a human temperature detecting element X.

The determination unit 32 determines whether or not an object present within the alert range A of the thermal imaging camera 2 is a human body HB based on the arrangement mode and placement of the human temperature detecting elements X in the two-dimensional array of the temperature measuring elements 21.

Moreover, in order to be able to detect both a human body HB located at a near distance and a human body HB located at a far distance, the determination unit 32 of the present embodiment detects a human body HB when the arrangement mode or placement of the human temperature detecting elements X is at least one of the two types of pattern described below.

The first pattern (Pattern 1) is for a far distance, and is for a case in which the human temperature detecting elements X are arranged continuously in only one column or in only two columns in the two-dimensional array of the temperature measuring elements 21 of the thermal imaging camera 2.

This Pattern 1 of the present embodiment is for a case in which three human temperature detecting elements X are arranged in a longitudinal direction in only one column or in only two columns. Pattern 1 may also be used in a case in which from 4 to 7 human temperature detecting elements X are arranged in a longitudinal direction, and is appropriately set so as to correspond to the shape of the detection target human body.

The second pattern (Pattern 2) is for a near distance, and is for a case in which the human temperature detecting elements X are located in the four corners of an arbitrary rectangle in the two-dimensional array of the temperature measuring elements 21 of the thermal imaging camera 2, and is for a case in which these rectangular areas are arranged in only one column or in only two columns.

In a case in which Pattern 2 is applied, the determination unit 32 regards a rectangular area formed by four human temperature detecting elements X as being a human temperature detection unit area Y in which a human body temperature has been detected, and determines whether or not a human body HB is present based on the arrangement mode of the human temperature detection unit areas Y. The determination unit 32 determines that a human body HB is present in a case in which the human temperature detection unit areas Y are arranged in only one column or in only two columns.

More specifically, Pattern 2 is for a case in which two to three human temperature detection unit areas Y are arranged continuously in a longitudinal direction in only one column or in only two columns. How many human temperature detection unit areas Y arranged in a column constitute this Pattern 2 is appropriately set in accordance with the number and arrangement mode of the temperature measuring elements 21.

The report output unit 33 is able to output a command to various reporting devices so as to provide a report that corresponds to the detection results from the determination unit 32. The various types of reporting devices may be, for example, warning lights or buzzers. The reporting of the detection results may be made to the human body HB that has been detected, or may be made remotely to the installer of the human body detection system 100.

The report output unit 33 is able to vary the content of a command given to the reporting device so as to correspond to the pattern used by the determination unit 32 for the human body detection. For example, it is possible for the buzzer audio level to be made louder in a case in which a human body HB is detected using Pattern 2 for a near distance compared to the buzzer audio level in a case in which a human body HB is detected using Pattern 1 for a far distance.

### [Operation of the Human Body Detection System 100]

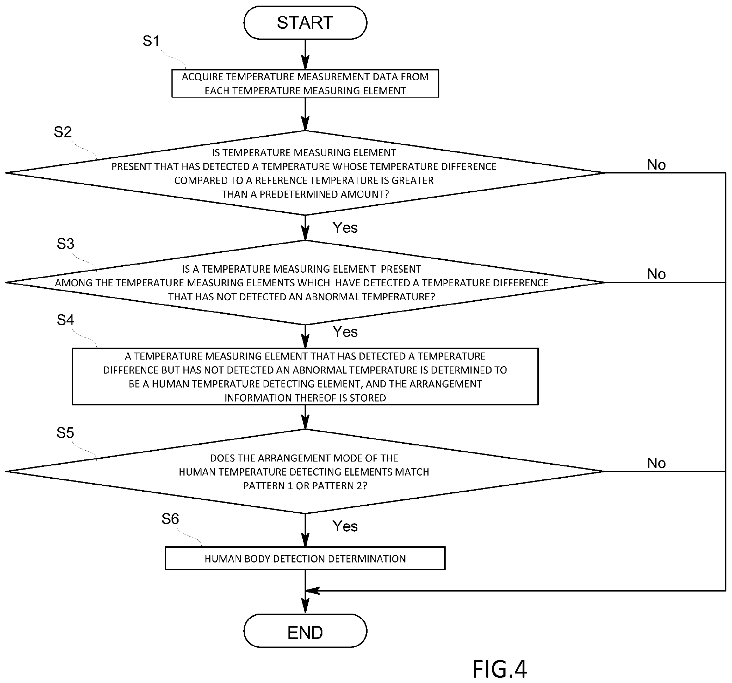

Hereinafter, an operation performed when the human body detection system 100 of the present embodiment detects a human body HB will be described with reference to the flowchart shown in FIG. 4. FIG. 4 shows a processing flow of steps performed by the determination unit 32 to determine whether or not an object captured by the thermal imaging camera 2 is a human body HB.

Firstly, when the human body detection system 100 is operated, the determination unit 32 acquires from the respective temperature measuring elements 21 temperature measurement data that was measured at a particular timing (S1).

Based on the respective temperature measurement data and on the reference temperature data acquired from the storage unit 31, the determination unit 32 then determines whether or not a temperature measuring element 21 that has detected a temperature whose temperature difference compared to the reference temperature is greater than a predetermined value (hereinafter, this may be referred to as a 'temperature difference detecting element 21') is present among the respective temperature measuring elements 21 (S2).

Furthermore, based on the respective temperature measurement data and on the abnormal temperature data acquired from the storage unit 31, the determination unit 32 also determines whether or not a temperature measuring element 21 that has not detected an abnormal temperature is present among the temperature measuring elements 21 that have detected a temperature whose temperature difference compared to the reference temperature is greater than a predetermined value (S3).

If a temperature measuring element 21 that has detected a temperature whose temperature difference compared to the reference temperature is greater than a predetermined value, and that has not detected an abnormal temperature is present, then the determination unit 32 determines that this is a human temperature detecting element X, and stores the arrangement information for this human temperature detecting element X (S4).

Next, based on the arrangement information stored for each human temperature detecting element X, the determination unit 32 determines whether or not the arrangement mode and placement of the human temperature detecting elements X in the two-dimensional array of temperature measuring elements 21 matches either Pattern 1 or Pattern 2 (S5).

In a case in which the arrangement mode and placement of the human temperature detecting elements X matches either Pattern 1 or Pattern 2, the determination unit 32 determines that the object present within the alert range A of the thermal imaging camera 2 is a human body HB, resulting in a human body HB being detected (S6).

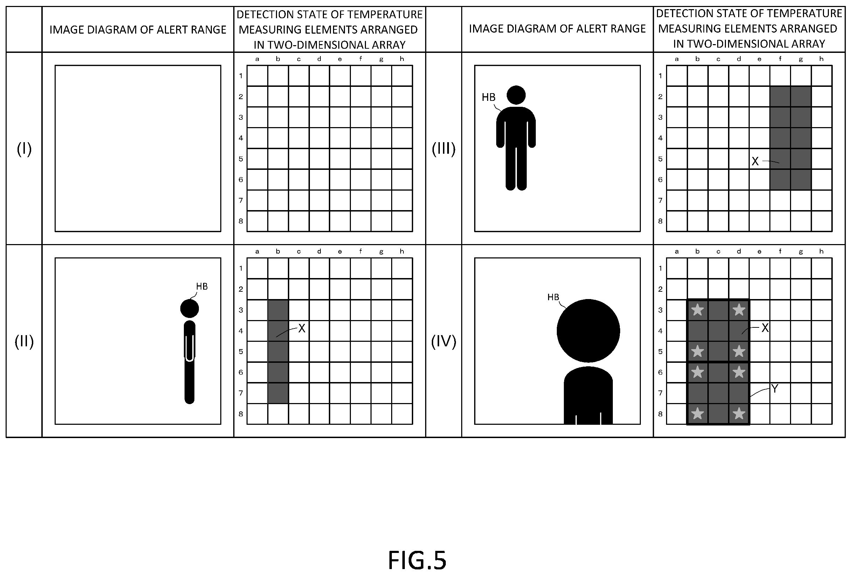

The above-described two patterns of the present embodiment will now be described in more detail with reference to FIG. 5.

In each of the diagrams (I) through (IV) in FIG. 5, the grid portion of the right side thereof shows a detection state of each temperature measuring element 21 located on the two-dimensional array of the thermal imaging camera 2, while the frame interior on the left side thereof is an image diagram of the interior of the alert range A that is able to be derived by the system 100 based on the temperature measurement data from the thermal imaging camera 2.

In the grid portions shown in FIG. 5, the white grid squares represent temperature detecting elements 21 that have not detected a human body temperature, while the dark grid squares represent human temperature detecting elements X. The stars on the grid are shown for convenience in order to indicate the temperature measuring elements 21 in the four corners of the human temperature detection unit areas Y.

FIG. 5 (I) shows a case in which none of the temperature measuring elements 21 of the thermal imaging camera 2 has detected a human body temperature. In this case, because there is no sequence of temperature measuring elements 21 in the two-dimensional array thereof that fits the above-described patterns, the determination unit 32 does not determine that a human body HB is present within the alert range A or, alternatively, the determination unit 32 determines that a human body HB is not present within the alert range A.

FIG. 5 (II) shows a case in which a cluster (b3 ~ b7) of human temperature detecting elements X made up of five human temperature detecting elements X are arranged in series on the two-dimensional array of the temperature measuring elements 21 of the thermal imaging camera 2. The human temperature detecting elements X in this sequence can be said to be arranged in only a single column so that the sequence corresponds to pattern 1. In this case, the determination unit 32 determines that a human body HB is present within the alert range A.

FIG. 5 (III) shows a case in which clusters (f2 ~ f6) that are each made up of five human temperature detecting elements X so as to total ten human temperature detecting elements X are arranged in series adjacently to each other on the two-dimensional array of the temperature measuring elements 21 of the thermal imaging camera 2. The human temperature detecting elements X in this sequence can be said to be arranged in only two columns so that the sequence corresponds to pattern 1.

FIG. 5 (IV) shows a case in which three columns that are each made up of six human temperature detecting elements X (b3:d8) are arranged on the two-dimensional array of the temperature measuring elements 21 of the thermal imaging camera 2. In this drawing, clusters of human temperature detection unit areas Y that are formed by a rectangular area (b3:d5) that is formed by the human temperature detecting elements X (b3, d3, b5, d5), and a rectangular area (b6:d8) that is formed by the human temperature detecting elements X (b6, d6, b8, d8) are arranged in series. The human temperature detection unit areas Y in this sequence can be said to be arranged in only a single column so that the sequence corresponds to pattern 2.

### [Effects Obtained from the Present Embodiment]

As is described above, in the human body detection system 100 of the first embodiment, the width dimension of the unit detection area B detected by a single temperature measuring element 21 within the set distance of the alert range A is set so as to be equivalent to the width of the object to be detected (i.e., the width of the thickness of the human body HB).

By employing this structure, it is possible to ensure excellent detection accuracy of the human body HB within the alert range A with as few pixels as possible. Accordingly, if the size of the alert range A is the same, compared to the conventional technology, by reducing the pixel count of the thermal imaging camera 2, it is possible to achieve reductions in both device cost and device size as well as a simplification of the image processing, and to also achieve an expanded alert range A compared to the conventional technology if the pixel count is the same.

Moreover, because the determination unit 32 of the present embodiment determines whether a human body temperature has been detected in the temperature measuring elements 21 based on the temperature difference between the temperature measurement data and the reference temperature data, it is possible to acquire reference temperature data from the environment where the device is installed (i.e., the above-described reference temperature data), which is more convenient for a user as it is no longer necessary to manually create the data.

Moreover, because the reference temperature data can be set to the background temperature at the time of calibration, it is possible to reduce false detections and improve the accuracy of human body detection in a case in which the human body detection system 100 of the present embodiment is used in locations where the background temperature is close to the temperature of a human body.

Furthermore, because the temperature measuring elements 21 that have detected an abnormal temperature are not used for detecting a human body, the determination unit 32 is able to reduce false detections by means of a simple algorithm.

In a case in which a human body is present within the set distance of the alert range, the determination unit 32 of the present embodiment detects a human body HB based on whether or not the arrangement mode of the human temperature detecting elements X fits pattern 1.

If this structure is employed, in addition to making the calculation processing for recognizing a human body simpler, it also becomes possible to accurately detect a human body within the set distance of the alert range A based on two parameters (i.e., the temperature measured by the temperature measuring element and the arrangement mode of the measuring elements).

Moreover, in a case in which a human body HB is present at a closer distance than the set distance, the determination unit 32 of the present embodiment detects that human body HB based on whether or not the arrangement mode of the human temperature detection unit areas Y fits pattern 2.

If this structure is employed, because it is possible to determine whether or not an object captured by the thermal imaging camera 2 is a human body HB based not on all of the temperature measuring elements 21 within a plurality of human temperature detection unit areas Y, but instead on the temperature measuring elements 21 located in the four corners of each human temperature detection unit area Y, it is possible to simplify the detection calculation processing for a human body HB located within alert range A.

Furthermore, not only can it be more easily determined that a human body HB is located within the alert range A, but it is also possible to use the same method as the determination method used to detect a human body HB located at the above-described set distance, so that it is possible to promote a further simplification in the calculation processing.

### [Second Embodiment]

The determination unit of the first embodiment identifies a human temperature detecting element based on whether or not the temperature difference between the temperature measurement data and the reference temperature data is greater than or equal to a predetermined value, in other words, based on a relative value.

In contrast to this, the determination unit of the second embodiment identifies a human temperature detecting element based on an absolute value. For example, the determination unit of the present embodiment determines that a temperature measuring element that measures a temperature contained within a predetermined human body temperature range is a human temperature detecting element.

A predetermined human body temperature is, for example, the possible body temperature (skin temperature) of the human body HB. Note that a temperature that is apparently a human body temperature may be the possible surface temperature of clothing worn by the human body, or the possible temperature of portions of the human body covered by materials other than skin, such as hair.

This human body temperature is set appropriately in accordance with the environment of the installation location of this system 100, as well as with the season, the time of day, or the detection target (i.e., an adult or a child), or the like.

Employing such a system is useful in cases in which a human body HB is detected in an environment having a large temperature change, or in cases in which a stationary human body HB is being detected. Moreover, it also becomes possible to determine the conditions for human body detection before introducing this system 100.

### [Third Embodiment]

The determination unit of the third embodiment detects a human body based on the following two types of patterns in addition to (or instead of) the human body detection based on Pattern 1 and Pattern 2 described in the first embodiment.

The third pattern is for a case in which the human temperature detecting elements X are arranged in one column or in two columns in the two-dimensional array of the temperature measuring elements 21 of the thermal imaging camera 2 (Pattern 3).

The fourth pattern is for a case in which the determination unit 32 determines that the human temperature detection unit areas Y are arranged in one column or in two columns (Pattern 4).

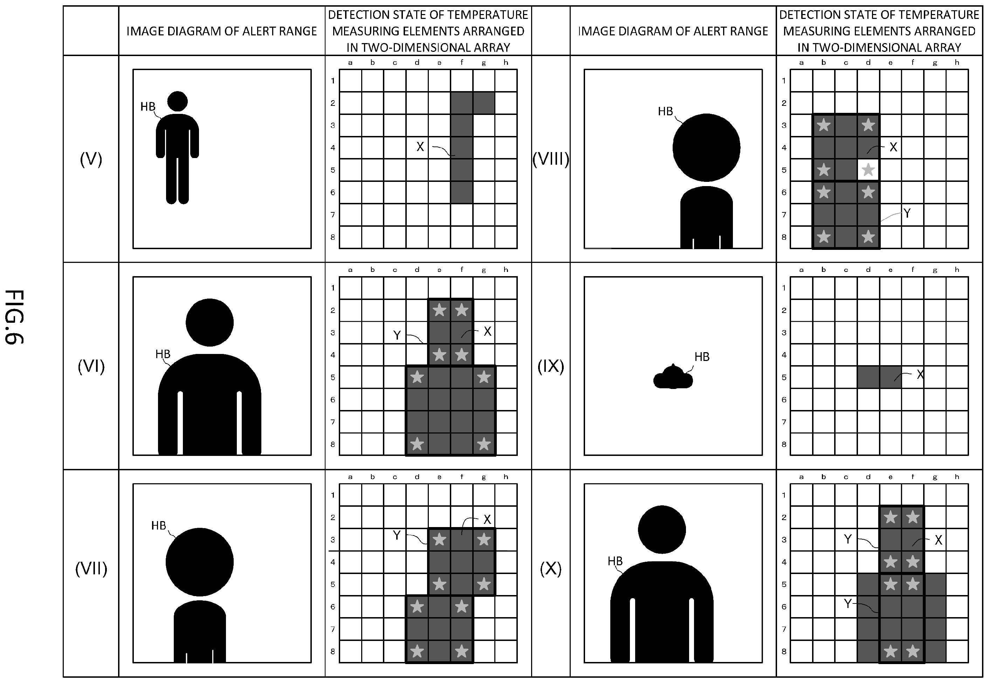

Pattern 3 and Pattern 4 will now be described in more detail with reference to FIG. 6. Note that the format of each diagram in FIG. 6 is the same as the format of each diagram in FIG. 5.

FIG. 6 (V) shows a case in which five consecutive human temperature detecting elements X are present in the two-dimensional array of the temperature measuring elements 21 of the thermal imaging camera 2 so as to extend in a column direction, and one human temperature detecting element X is additionally present immediately adjacent to a side of this column of human temperature detecting elements X so that this cluster of human temperature detecting elements X is arranged in an L shape.

Because the human temperature detecting elements X cannot be said to be arranged in one column or in only two columns, this arrangement does not correspond to the above-described Pattern 1. On the other hand, because there are at least five human temperature detecting elements X arranged in a single column (f2 ~ f6), this arrangement does correspond to Pattern 3.

FIG. 6 (VI) shows a case in which a large human temperature detection unit area Y (e2:f4) and a small human temperature detection unit area Y (d5:g8) are arranged consecutively.

In this case, the two human temperature detection unit areas Y arranged in a single vertical column have different horizontal widths, so that these two human temperature detection unit areas Y cannot be said to be arranged in only one column, and do not correspond to the above-described Pattern 2.

In contrast, the arrangement of the two human temperature detection unit regions Y (e2:f4) and (d5:g8) are vertically aligned in one column, so they correspond to Pattern 4.

FIG. 6 (VII) shows a case in which human temperature detection unit areas (e3:g5) and human temperature detection unit areas (d6:f8) are arranged in a single vertical column, but are consecutively aligned while being offset in the width direction of the column.

In this case, the two human temperature detection unit areas Y cannot be said to be lined up in a single column, and therefore do not correspond to Pattern 2.

In contrast, the arrangement of the two human temperature detection unit areas Y (e3: g5) and (d6: f8) are vertically aligned in one column, so they correspond to Pattern 4.

By detecting a human body based on these Patterns 3 and 4, a human body HB can be detected based on a wider variety of arrangement modes or configurations of the human temperature detecting elements X.

### [Fourth Embodiment]

In a case in which a human body is detected based on Pattern 2, the determination unit of the first embodiment regards any arbitrary rectangular area whose four corners are occupied by human temperature detecting elements as a human temperature detection unit area.

In contrast to this, in a case in which a human body is detected based on Pattern 2, the determination unit of the fourth embodiment firstly performs a smoothing operation such as averaging on the temperatures detected by the temperature measuring elements located at the four corners of an arbitrary rectangular area in the two-dimensional array of the temperature measuring elements of the thermal imaging camera, and in a case in which a temperature determined by means of this smoothing calculation has a predetermined temperature difference from a reference temperature, or is contained within the range of a human body temperature, then the determination unit regards this rectangular area as a human temperature detection unit area.

The determination unit of the first embodiment does not regard the rectangular area formed by the four temperature measuring elements (b3, d3, b5, d5) shown in FIG. 6 (VIII) to be a human temperature detection unit area Y.

In contrast to this, in a case in which, for example, there is a temperature difference greater than a predetermined value between an average of the temperatures detected by the temperature measuring elements (b3, d3, b5, d5) and an average of the reference temperature data for the four temperature measuring elements, then the determination unit of the fourth embodiment regards the rectangular area formed by the four temperature measuring elements to be a human temperature detection unit area Y.

If this structure is employed, then even in the case of a person whose human body temperature is partially undetectable, such as, for example, in the case of a person who was carrying a thermal source such as a hand warmer or a refrigerant, it is still possible to detect a human body HB by canceling out the effects thereof by performing a smoothing calculation.

### [Fifth Embodiment]

In the determination unit 32 of the first embodiment, in a case in which, for example, a human temperature detection unit area Y on the two-dimensional array of temperature measuring elements 21 is moving with unhuman-like rapidity, or else is remaining so still that it is again unhuman-like, there is a possibility that it may be mistakenly detected as a human body HB.

Therefore, the determination unit of the fifth embodiment determines whether or not an object is a human body based additionally on a change over time in the human temperature detecting elements or the human temperature detection unit areas. For example, if the amount of change per unit time in the arrangement of the human temperature detecting elements is greater than or equal to a predetermined amount of change, then the determination unit determines that an object captured by thermal imaging camera 2 is a non-human body.

If the alert area is area frequented by people, then the predetermined amount of change is set based on the movement (i.e., walking) speed of people.

The determination unit of the fifth embodiment detects the direction of movement of a human body within the alert range based additionally on a change over time in the human temperature detecting elements or the human temperature detection unit areas.

Because the determination unit of the fifth embodiment is able to detect a human body temperature HB based on changes over time in a human temperature detecting elements or human temperature detection unit areas, in cases in which a human temperature detecting element or a human temperature detection unit area moves extremely quickly or does not move at all (such as, for example, when there happens to be a heat source in the background such as a boiler that occasionally emits human body temperature), it is possible to reduce any mistaken detections that are due to the effects of noise or of the background or the like so that a human body present within the alert range can be detected with greater accuracy.

Furthermore, because the determination unit of the present embodiment is able to detect the direction of movement of a human body, this is useful in cases such as when the flow of people within a facility is to be managed.

### [Sixth Embodiment]

The information processing device of the sixth embodiment performs the functions of a distance calculation unit that calculates a distance to a detected human body.

In a case in which the determination unit detects a human body using Pattern 1 (or 3), the distance calculation unit calculates the set distance of the alert range of the thermal imaging camera as a distance between the detected human body and the thermal imaging camera.

In a case in which the determination unit detects a human body using Pattern 2 (or 4), the distance calculation unit calculates the distance between the detected human body and the thermal imaging camera based on the number of temperature measuring elements on one side of the human temperature detection unit area and on the width dimension of the unit detection area by a single temperature measuring element at the set distance.

Because the information processing device 3 of the sixth embodiment functions as a distance calculation unit, for example, because the information processing device 3 of the sixth embodiment is able to specify a distance between a thermal imaging camera and a human body, it is able to calculate positional information for the human body within the alert range, in other words, to calculate the angle and distance when the thermal imaging camera is used as a reference. Moreover, it also becomes possible to increase the variety of human body detection options, such as progressively changing the alarm sound as a human body approaches.

### [Seventh Embodiment]

The information processing device of the seventh embodiment performs the functions of a non-human body determination unit that identifies detection targets other than the human body, and of a situation determination unit that determines a situation within the alert range.

The non-human body determination unit determines that an object captured by a thermal imaging camera is a non-human body based on an arrangement mode of the temperature measuring elements that detect a temperature of a non-human body (hereinafter referred to as non-human body temperature detecting elements).

For example, in a case in which the detection target is to be a vehicle, reference temperature data (i.e., vehicle temperature data) that is used to detect a vehicle is stored in advance in a storage unit. The non-human body determination unit then identifies the temperature measuring element (the non-human body temperature detecting element) that detected the vehicle temperature based on the vehicle temperature data and the temperature measurement data, and determines whether or not the object captured by the thermal imaging camera is a vehicle based on the arrangement mode of the temperature measuring elements.

The situation determination unit identifies the situation within the alert range based on a positional relationship between the human temperature detecting element or human temperature detection unit area that provides the basis for the detection of the human body by the determination unit, and the non-human body temperature detecting element that provides the basis for the detection of the non-human body by the non-human body determination unit.

For example, in a case in which a non-human body temperature detecting element that detects a high temperature is located in close proximity to a human temperature detecting element, then the situation determination unit identifies that situation as being a dangerous situation.

The situation determination unit also has a function of determining that an abnormal situation has occurred if any of the non-human body temperature detecting elements measures a particularly abnormal temperature.

For example, in a case in which there is a temperature measurement element that has detected a non-human body temperature such as a temperature of 60 degrees or higher, then the situation determination unit determines that abnormal heat generation or a fire has occurred.

Because the information processing device of the seventh embodiment functions as a non-human body determination unit, it is able to be applied to objects other than a human body that are present within an alert range, thereby broadening its possible applications.

Because the situation determination unit of the seventh embodiment is able to identify a situation within the alert range based on the human body detection elements and the non-human body temperature detecting elements, it is possible to provide the human body detection system with a wider variety of functions in accordance with a particular situation. For example, in a case in which a human body and a high-temperature non-human body are detected within an alert area, it is possible to determine based on their relative positions that there is a possibility that a fire has been deliberately set, and to consequently increase the alert level within the alert range further based on this determination.

Moreover, because the situation determination unit is able to detect that abnormal conditions have occurred based on non-human body temperature detecting elements, it is also possible to provide the human body detection system with functions of, for example, a fire detector. In addition, it is also possible for the human body detection system to detect abnormal heat generation from materials at a construction site.

### [Additional Embodiments]

As is shown in FIG. 6 (IX), the human temperature detection unit area may also be a rectangular area formed by the human temperature detecting elements located inside a cluster of human body temperature elements.

In each of the above-described embodiments, the configuration of the human temperature detection unit elements is an arbitrary rectangle, however, it is also possible for this configuration to be a specific rectangle. For example, the shape of the human temperature detection unit area may be specified as a square whose side length is the length of 2 ~ 3 temperature measuring elements arranged in a row. A plurality of types of this specific rectangle may be set.

The human temperature detection unit area in each of the above-described embodiments is an arbitrary rectangular area formed by four human temperature detecting elements, however, it is also possible for the human temperature detection unit area to be, for example, an arbitrary polygonal area formed by three or more human temperature detecting elements. For example, in a case in which a human temperature detecting element is located in the three corners of an arbitrary triangle, then that triangle may be regarded as a human temperature detection unit area.

Even if this structure is employed, it is still possible to simplify the calculation processing for detecting a human body compared to when a human body is detected based on all the temperature measuring elements within the human temperature detection unit area.

In a case in which a human temperature detecting element is located in each of the four corners of an arbitrary rectangle, the determination unit of each of the above-described embodiments regards that rectangular area as a human temperature detection unit area, however, in a case in which a human temperature detecting element is located in each of the four corners of an arbitrary rectangle and, in addition, a human temperature detecting element is also located at a predetermined position within that rectangular area (for example, near the center thereof), then it is also possible for the determination unit to regard that rectangular area as a human temperature detection unit area.

The determination unit also performs a smoothing calculation on the temperatures detected by the temperature measuring elements located in the four corners of an arbitrary rectangular area, and by the temperature measuring elements located in predetermined positions within that rectangular area. In a case in which a temperature determined by this smoothing calculation has a predetermined temperature difference from a reference temperature, or in a case in which the temperature determined by this smoothing calculation is within the range of a human body temperature, then it is also possible for the determination unit to regard this rectangular area as a human temperature detection unit area.

It is also possible for there to be a plurality of the predetermined locations within the rectangular area.

By employing this type of system, it is possible to simplify the calculation processing for detecting the presence of a human body and to also improve the accuracy when detecting a human body.

It is also possible to employ a structure in which, in a case in which a human body is detected based on the arrangement of the human temperature detection unit areas, the determination unit does not employ for this determination any rectangular areas that include a temperature measuring element that detected an abnormal temperature.

If this structure is employed, then because the determination unit does not employ any rectangular areas that include a temperature measuring element that detected an abnormal temperature for detecting a human body, it is not determined that a human body is present in the rectangular area containing the temperature measuring element that measured a temperature that was not possibly that of a human body, so that the detection performance of the human body detection system can be improved.

It is also possible for a determination unit that has detected a human body to determine whether or not the detected human body is presenting an abnormal body temperature (i.e., hyperthermia or hypothermia) based on the temperature measurement data of the human temperature detecting elements or on the arrangement mode or placement of the human temperature detecting elements.

Moreover, it is also possible for a determination unit that has detected a human body to determine the size of the detected human body, for example, to determine whether the human body is an adult or a child based on the temperature measurement data of the human temperature detecting elements or the arrangement or placement of the human temperature detecting elements.

If this structure is employed, then this system would be convenient for facility entrance management or the like.

The thermal imaging camera 2 of the above-described embodiments is mounted on a wall, however, it is also possible for the thermal imaging camera to be mounted on a ceiling or the like in such a way that an image acquisition surface thereof faces in a vertical direction.

In a case in which a thermal imaging camera is mounted on the ceiling, as shown in FIG. 6 (IX), it is possible to detect a human body HB. If the set distance of the alert range of the thermal imaging camera is adjusted to approximately the distance between the ceiling and the ground, then it is possible to detect a human body HB by means of the arrangement of two or three human temperature detecting elements in the thermal imaging camera.

The pixel count of the thermal imaging camera 2 of the above-described embodiments is 64 pixels, however, the number of pixels of the thermal imaging camera is not limited to this. A thermal imaging camera having a higher resolution may also be used, in which case the set distance can be set to a longer distance, making it possible to detect a human body at a longer distance. If a thermal imaging camera having a lower resolution is used, then it becomes possible to employ a simpler structure for the human detection system.

The human body detection system of each of the above-described embodiments may detect a human body present within the alert range of the thermal imaging camera in real time while measuring the temperature with the thermal imaging camera 2, or may detect a human body present within the alert range A of the thermal imaging camera based on previously measured temperature measurement data.

The determination unit of each of the above-described embodiments detects a human body in a case in which the human temperature detecting elements or human temperature detection unit areas are arranged in one or two columns, however, it is also possible for the determination unit to detect a human body in a case in which the human temperature detecting elements or human temperature detection unit areas are arranged in a specific pattern. This specific pattern may be, for example, a dogleg shape, a 2 * 1 configuration, a 3 * 1 configuration, or a 4 * 2 configuration or the like, or may be arranged in a plurality of (i.e., more than two) columns.

The determination unit 32 of each of the above-described embodiments detects a human body in a case in which a plurality of human temperature detection unit areas are arranged together, however, it is also possible for a human body to be detected based on a single human temperature detection unit area.

The human body detection system of the above-described embodiments is formed using a single thermal imaging camera, however, it is also possible for the human body detection system according to the present invention to be formed using a plurality of thermal imaging cameras.

If this type of structure is employed, then it is possible to construct a more extensive alert range. If a plurality of low-resolution thermal imaging cameras are used, then it becomes possible to achieve significant cost reductions and space savings relative to the extent of the alert range. Moreover, according to the present invention, because the quantity of information that the information processing device must process in order to detect a human body is small, even if the number of thermal imaging cameras is increased, the quantity of information that must be processed does not become too great.

For example, by combining two or four thermal imaging cameras having a 90-degree angle of view, it becomes possible to construct a human body detection system having an alert range A of 180 degrees or 360 degrees.

It is also possible for the human body detection system of the above-described embodiments to be combined with another PIR sensor or the like, and to be configured so that temperature detection by the thermal imaging camera 2 can be switched on or off based on an output from this PIR sensor. This capability can be used to set a standby mode or an alert mode or the like so as to enable power consumption to be reduced.

The present invention also includes a program for a human body detection system that enables a computer to perform the functions of the information processing device 3 of each of the above-described embodiments.

If this type of program is employed, then the calculation processing performed by the information processing device can be simplified and human body detection using an existing thermal imaging camera becomes possible.

### [Industrial Applicability]

According to the present invention, it is possible to ensure excellent detection accuracy of a human body within an alert range with as few pixels as possible. Accordingly, if the size of the alert range is the same, compared to the conventional technology, by reducing the pixel count of the thermal imaging camera, it is possible to achieve reductions in both device cost and device size as well as a simplification of the image processing, and to also achieve an expanded alert range compared to the conventional technology if the pixel count is the same.

### [Description of the Reference Numerals]

- 100: Human Body Detection System
- 2: Thermal Imaging Camera
- 21: Temperature Measuring Element
- X: Human Temperature Detecting Element
- Y: Human Temperature Detection Unit Area
- 3: Information Processing Device
- 31: Storage Unit
- 32: Determination Unit
- 33: Report Output Unit
- A: Alert Range
- B: Unit Detection Area
- HB: Human Body

## Claims

1. A human body detection system that detects a human body present within a preset alert range, comprising:
a thermal imaging camera having temperature measuring elements arranged in an array formation; and
an information processing device that determines whether or not an object captured by the thermal imaging camera is a human body, wherein
the human body detection system is **characterized in that** a width dimension of a detection area detected by a single temperature measuring element in a set distance of the alert range is set to a width equivalent to a thickness of a human body.

2. The human body detection system according to Claim 1 wherein, in a case in which human temperature detecting elements, which are the temperature measuring elements in the thermal imaging camera that detect a temperature whose temperature difference compared to a reference temperature is greater than a predetermined amount, or are the temperature measuring elements in the thermal imaging camera that detect a temperature that is within the range of human body temperatures, are arranged in one column or in two columns, then the information processing device determines that a human body is present.

3. The human body detection system according to Claim 1 wherein, in a case in which human temperature detecting elements, which are the temperature measuring elements that detect a temperature whose temperature difference compared to a reference temperature is greater than a predetermined amount, or are the temperature measuring elements in the thermal imaging camera that detect a temperature that is within the range of human body temperatures, are located in the four corners of an arbitrary rectangle in the thermal imaging camera, then the information processing device regards that rectangular area as a human temperature detection unit area where a human body temperature has been detected, and determines that a human body is present based on the arrangement mode of a plurality of human temperature detection unit areas.

4. The human body detection system according to Claim 1, wherein the information processing device performs a smoothing operation such as averaging on the temperatures detected by the temperature measuring elements located in the four corners of the arbitrary rectangle in the thermal imaging camera, and in a case in which a temperature difference between the temperature determined via the smoothing operation and a reference temperature is equal to or greater than a predetermined value, or in a case in which the temperature obtained by the smoothing operation is within the range of human body temperatures, then the information processing device regards the rectangular region as a human temperature detection unit area, and determines that a human body is present based on the arrangement mode of a plurality of human temperature detection unit areas.

5. The human body detection system according to either of Claims 3 or 4, wherein the information processing device determines that a human body is present in a case in which the human temperature detection unit areas are arranged in one column or in two columns.

6. The human body detection system according to either of Claims 3 or 4, wherein the information processing device determines whether or not a human body is present based additionally on changes over time in the human temperature detection unit areas.

7. The human body detection system according to either of Claims 3 or 4, wherein the information processing device calculates a distance to a human body based on a number of temperature measuring elements on one side of the human temperature detection unit area.

8. The human body detection system according to any of Claims 2, 3 or 4, wherein the information processing device determines that an object captured by the thermal imaging camera is a non-human body based on the arrangement mode of temperature measuring elements that detect the temperature of the non-human body in the thermal imaging camera.

9. The human body detection system according to Claim 8, wherein the information processing device determines a situation within the alert range based on a relationship between a temperature measuring element determined to be a human body and a temperature measuring element determined to be a non-human body.

10. A program for a human body detection system **characterized by** enabling a computer to function as the information processing device according to Claim 2.
